# EUROPEAN PATENT APPLICATION

(11) **EP 4 671 697 A1**
(43) Date of publication of application: **31.12.2025**
(21) Application number: 25185420.4
(22) Date of filing: 26.06.2025
(51) Int. Cl.: G01D 13/22

(54) **DIGITAL AND ANALOGUE INSTRUMENT FOR A VEHICLE WITH MAGNETIC COUPLING**

(30) Priority: 26.06.2024 IT 202400014701
(71) Applicant: FERRARI S.p.A., 41100 Modena (IT)
(72) Inventor: FERRAZZANO, Antonio, 41100 MODENA (IT); PILICHI, Alessandro, 41100 MODENA (IT); SOSCIA, Salvatore, 41100 MODENA (IT); MORAS, Riccardo, 41100 MODENA (IT)
(74) Representative: Studio Torta S.p.A.

(57) **Abstract**

A digital and analogue instrument (1) for a vehicle, comprising: a digital screen (3); a pointer (2) which is movably mounted so as to move in front of the digital screen (3); and an actuator device (4) configured to move the pointer (2). The actuator device (4) comprises: a front rotor (5) which has a centrally holed ring shape, is arranged in front of the digital screen (3), is rotatably mounted about a central rotation axis (6), and supports the pointer (2); a plurality of front permanent magnets (13) that are supported by the front rotor (5); a rear rotor (9) that is rotatably mounted about the central rotation axis (6); a plurality of rear permanent magnets (14) which are supported by the rear rotor (9) and are configured to be magnetically attracted by the respective front permanent magnets (13); and an electric motor (10) configured to rotate the rear rotor (9).

## Description

### CROSS-REFERENCE TO RELATED PATENT APPLICATIONS

This application claims priority from Italian Patent Application No. 102024000014701 filed on June 26, 2024, the entire disclosure of which is incorporated herein by reference.

### TECHNICAL FIELD

The present invention relates to a digital and analogue instrument for a vehicle, i.e. to an instrument that is defined as *"phygital"* (a crasis of *"physical"* and *"digital"*) as it combines the physical presence of a pointer with the digital dimension of a digital screen.

### PRIOR ART

Patent application EP4365002A2 describes a digital and analogue instrument comprising a digital screen, a pointer which can be arranged over the digital screen and is movably mounted to move over the digital screen, and an actuator device configured to move the pointer over the digital screen.

According to a possible embodiment described in patent application EP4365002A2, the actuator device is configured to move the pointer by transmitting motion to the pointer via a contactless magnetic coupling; in particular, the actuator device comprises a motorised slider which is arranged behind the digital screen (i.e. on the opposite side of the digital screen with respect to the pointer), is aligned to the pointer and magnetically attracts the pointer to itself (i.e. the slider supports a permanent magnet which is adapted to generate a magnetic field to magnetically attract the pointer). The above-described actuator device allows the pointer to be moved only with relatively limited speeds and accelerations so as not to risk losing the magnetic connection between the motorised slider and the pointer; consequently, the actuator device allows the pointer to be used only to indicate the value of physical quantities that change relatively slowly.

According to a different embodiment described in patent application EP4365002A2, the actuator device comprises a support ring which is rotatably mounted and supports the pointer so that rotation of the support ring additionally causes the rotation of the pointer; inside the support ring there is an annular rack and the actuator device comprises an electric motor which rotates a pinion that meshes with the annular rack. The above-described actuator device allows the pointer to be moved only with relatively limited speeds and accelerations both due to the transmission limits in the coupling between pinion and rack, and to avoid generating too much noise; consequently, the actuator device allows the pointer to be used only to indicate the value of physical quantities that change relatively slowly.

Patent application US2010064961A1 describes an instrument comprising a digital screen, a pointer that is movably mounted to move in front of the digital screen, and an actuator device configured to move the pointer by transmitting motion to the pointer via a contactless magnetic coupling; the actuator device comprises a first ring-shaped magnet integral with the pointer and a second magnet which is arranged on the opposite side of the digital screen with respect to the first magnet and is driven into rotation by an electric motor in order to also drive in motion the first magnet as a result of the contactless magnetic coupling.

Patent application US2017211953A1 and patent application DE19537666A1 describe an instrument comprising a digital screen, a pointer that is movably mounted to move in front of the digital screen, and an actuator device configured to move the pointer by transmitting motion to the pointer via a contactless magnetic coupling.

### SUMMARY OF THE INVENTION

Aim of the present invention is to provide a digital and analogue instrument for a vehicle wherein the pointer can be safely moved with high speeds and accelerations in order to be also used to indicate the value of physical quantities that change suddenly.

According to the present invention, there is provided a digital and analogue instrument for a vehicle, as claimed in the appended claims.

The claims describe preferred embodiments of the present invention forming an integral part of the present description.

### BRIEF DESCRIPTION OF THE FIGURES

The present invention will now be described with reference to the accompanying drawings, which illustrate a non-limiting exemplary embodiment thereof, in which:
- Figure 1 is a perspective view, with parts removed for clarity's sake, of a digital and analogue instrument realized in accordance with the present invention;
- Figure 2 is a side view, with parts removed for clarity's sake, of the digital and analogue instrument of Figure 1;
- Figure 3 is a perspective view of a rear rotor of the digital and analogue instrument of Figure 1; and
- Figure 4 is a perspective view of a front rotor of the digital and analogue instrument of Figure 1.

### PREFERRED EMBODIMENTS OF THE INVENTION

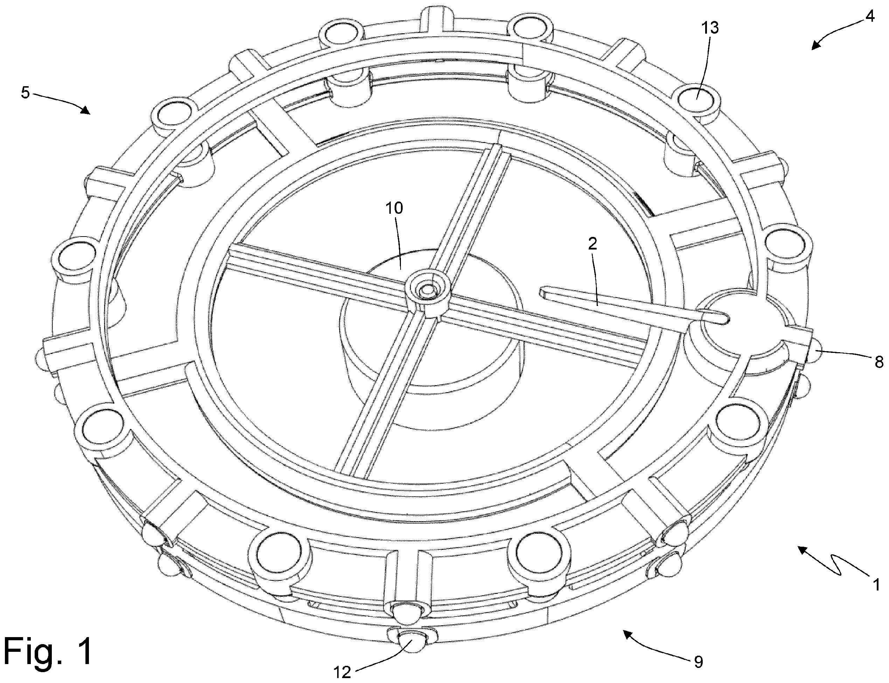

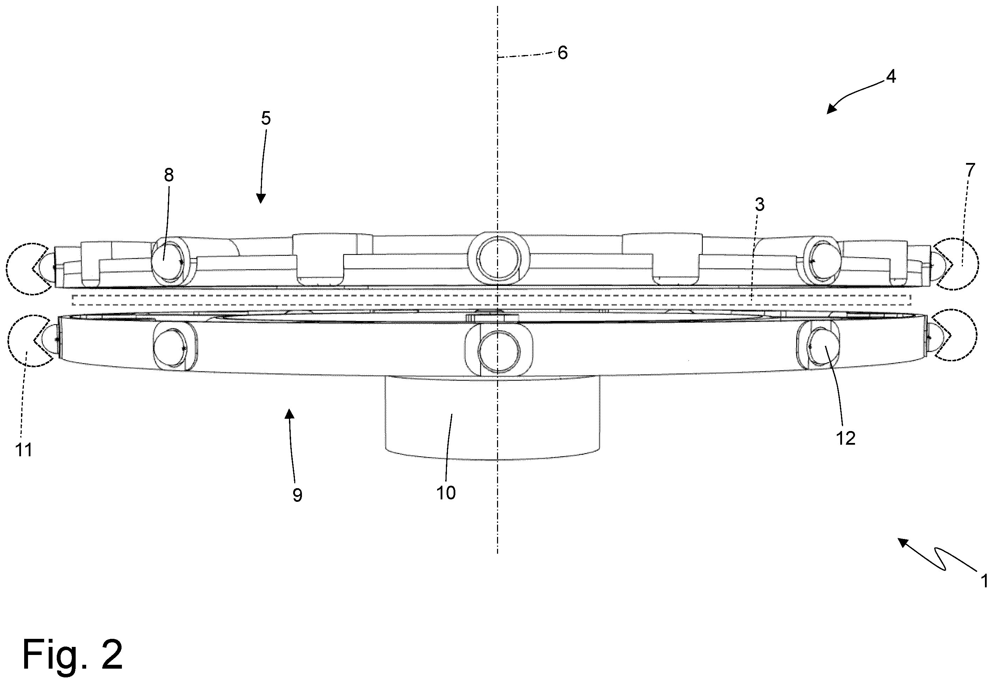

In Figure 1, reference number 1 denotes as a whole a digital and analogue instrument for the dashboard of a vehicle (in particular of a car). The digital and analogue instrument 1 is defined as *"phygital"* (a crasis of *"physical"* and *"digital"*) as it combines the physical presence of a pointer 2 with the digital dimension of a digital screen 3 (schematically shown in Figure 2 and not shown for clarity's sake in Figure 1).

In other words, the digital and analogue instrument 1 comprises the digital screen 3 (for example realized with LED technology or OLED technology) and the pointer 2 which is arranged in front of (above) the digital screen 3 to overlap (when necessary) the digital screen 3. In the embodiment shown in the accompanying figures, the digital screen 3 is circular (round) in shape, but according to other non-shown embodiments the digital screen 3 may have a different shape such as, for example, a rectangular or square shape.

The pointer 2 is movably mounted to move (when necessary) in front of (above) the digital screen 3 to indicate information displayed by the digital screen 3. According to other non-shown embodiments, the number and arrangement of the pointers 2 may be different and, for example, two or more pointers 2 may be coupled to the same digital screen 3**.**

According to the embodiment shown in the accompanying figures, the pointer 2 has a visible part (i.e. which overlaps the digital screen 3) which extends from the edge of the digital screen 3 towards the centre of the digital screen 3; i.e**.** the pointer 2 has a peripheral positioning as its visible part starts from the rim (from the periphery) of the digital screen 3.

The digital and analogue instrument 1 comprises an actuator device 4 which is configured to move the pointer 2 in front of (above) the digital screen 3 and directly supports the pointer 2. In particular, the actuator device 4 moves the pointer 2 via a contactless magnetic coupling.

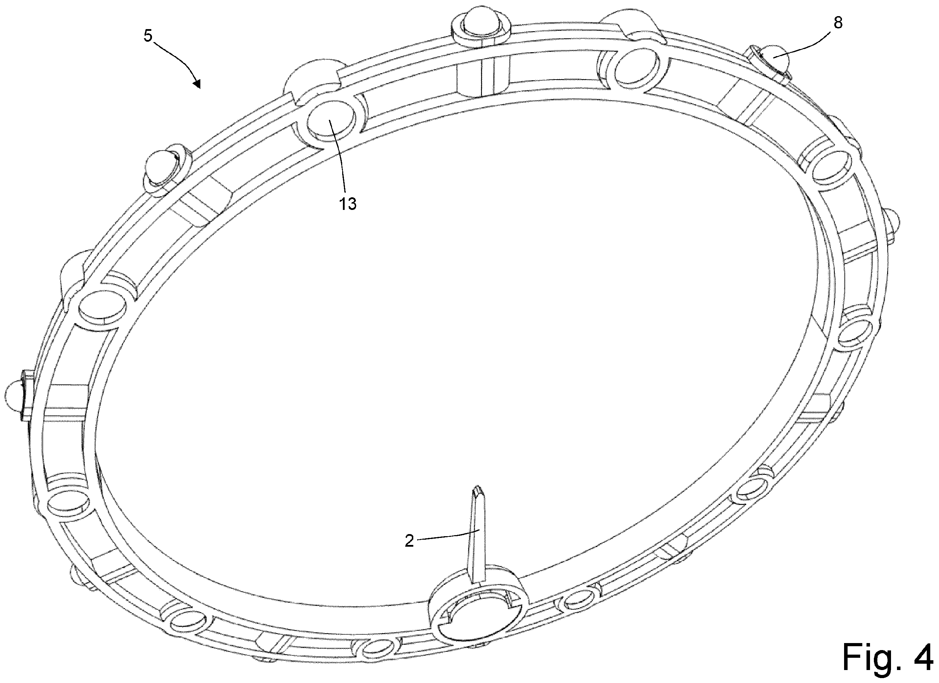

As shown in Figures 2 and 4, the actuator device 4 comprises a front rotor 5 which has a centrally holed ring shape (i.e. it centrally has a through hole), surrounds the digital screen 3, is rotatably mounted about a central rotation axis 6 (perpendicular to the plane of the digital screen 3) and supports the pointer 2 (i.e. the pointer 2 is integral with the front rotor 5 to rotate together with the front rotor 5 and projects cantilevered inwards from the front rotor 5): the rotation of front rotor 5 about rotation axis 6 additionally determines rotation of pointer 2 about the rotation axis 6. The front rotor 5 is arranged in front of (above) the digital screen 3 (so that the pointer 2 carried by the front rotor 5 can be located in front of (above) the digital screen 3 (i.e. can overlap the digital screen 3). That is**,** the front rotor 5 is arranged in front of (above) the digital screen 3 so that the digital screen 3 is visible through a central hole of the front rotor 5 (which, as previously stated, has a centrally-holed ring shape). In other words, the front rotor 5 is arranged in front of the digital screen 3 and has a ring shape having a central hole which has an area greater than a useful area of the digital screen 3 so that the useful area of the digital screen 3 is visible through the central hole of the front rotor 5; the pointer 2 is integral with the front rotor 5 and projects cantilevered inwards from the front rotor 5 so as to be located at the central hole of front rotor 5 and overlap the digital screen 3.

The front rotor 5 is inserted into a containing ring 7 (schematically illustrated in Figure 2) which is stationary (i.e. is fixed to a frame of the digital and analogue instrument 1) and coaxial to the front rotor 5 so that the front rotor 5 is free to slide (i.e. rotate about the rotation axis 6) with respect to the containing ring 7. In other words, the containing ring 7 has, inside itself, an annular seat that slidably accommodates the front rotor 5 to allow the front rotor 5 to slide (i.e. rotate about the rotation axis 6) with respect to the containing ring 7.

To reduce friction between the front rotor 5 and the containing ring 7, the front rotor 5 supports a plurality of balls 8 which are arranged laterally (i.e. come into contact with the containing ring 7) and are idly housed in respective seats in order to be able to freely rotate with respect to the front rotor 5. According to a non-shown different embodiment, the balls 8 are missing and the lateral surface of the front rotor 5 and/or the lateral surface of the containing ring 7 are coated with a low-friction coating for example made of PTFE (polytetrafluoroethylene) or DLC (Diamond Like Carbon).

A casing of the digital and analogue instrument 1 conceals (covers, hides) the front rotor 5 leaving on sight only the part of pointer 2 that protrudes inwards further than the front rotor 5; i.e., a user observing the digital and analogue instrument 1 sees only the pointer 2 and the underneath digital screen 3 but does not see the front rotor 5 which is hidden from view by the casing of the digital and analogue instrument 1.

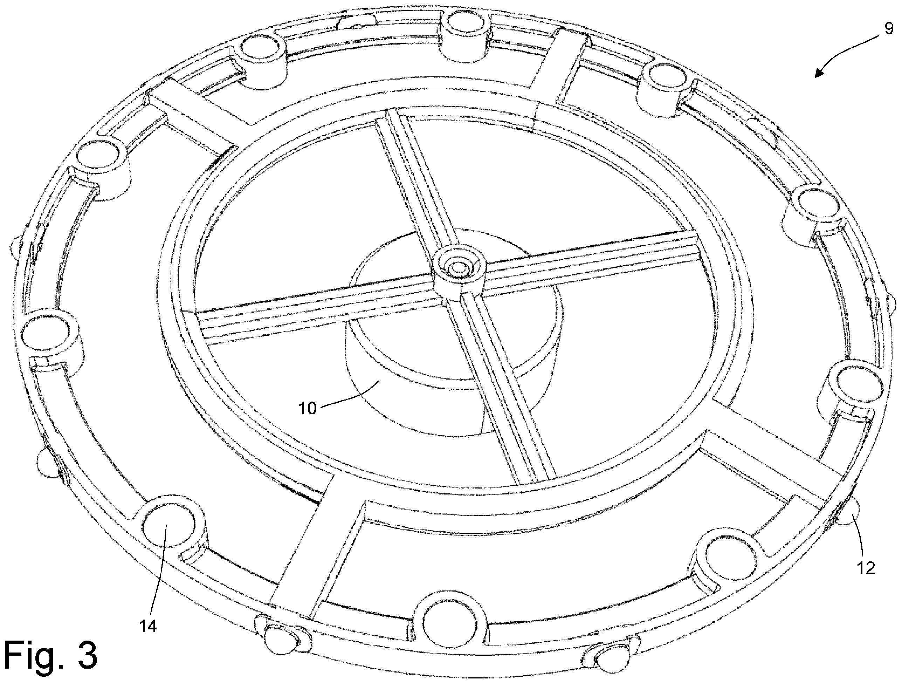

As illustrated in Figures 2 and 3, the actuator device 4 comprises a rear rotor 9 which has a centrally holed ring shape (but it could also have a solid shape without a central hole), surrounds the digital screen 3, is rotatably mounted about the central rotation axis 6 and is driven into rotation about the rotation axis 6 by an electric motor 10: the rotation of rear rotor 9 about rotation axis 6 is transmitted to the front rotor 5 via a magnetic coupling (better explained below) to cause the same rotation also of front rotor 5 and therefore of pointer 2. That is, the magnetic coupling between the rotors 5 and 9 keeps the rotors 5 and 9 synchronous with each other by transmitting the movement of rear rotor 9 to front rotor 5. The rear rotor 9 is arranged behind (beneath) the digital screen 3 so that the digital screen 3 is located between the front rotor 5 and the rear rotor 9 (as illustrated in Figure 2); consequently, the rear rotor 9 is completely hidden from view by the digital screen 3 which is located in front of (above) the rear rotor 9.

The rear rotor 9 is inserted into a containing ring 11 (schematically illustrated in Figure 2) which is stationary (i.e. it is fixed to a frame of the digital and analogue instrument 1) and coaxial to the rear rotor 9 so that the rear rotor 9 is free to slide (i.e. to rotate about rotation axis 6) with respect to the containing ring 11. In other words, the containing ring 11 has therein an annular seat which accommodates in slidable manner the rear rotor 9 in order to allow the rear rotor 9 to slide (i.e. to rotate about rotation axis 6) with respect to the containing ring 11.

To reduce friction between the rear rotor 9 and the containing ring 11, the rear rotor 9 supports a plurality of balls 12 that are arranged laterally (i.e. come into contact with the containing ring 11) and are idly housed in respective seats so to be able to rotate freely with respect to the rear rotor 9. According to a non-shown different embodiment, the balls 12 are missing and the lateral surface of rear rotor 9 and/or the lateral surface of containing ring 11 are coated with a low-friction coating for example made of PTFE (polytetrafluoroethylene) or DLC (Diamond Like Carbon) .

According to other non-shown embodiments, the containing ring 11 is missing (and thus only the containing ring 7 is present), the containing ring 7 is missing (and thus only the containing ring 11 is present), or both containing rings 7 and 11 are missing.

According to a preferred embodiment illustrated in the accompanying figures, the electric motor 10 is coaxial to the rear rotor 9 and directly supports the same rear rotor 9, i.e. the rear rotor 9 is fixed to an end of a rotating shaft of electric motor 10; according to a different embodiment, a speed reducer could be interposed between the shaft of electric motor 10 and the rear rotor 9.

As mentioned above, the rotation of rear rotor 9 about rotation axis 6 is transmitted to the front rotor 5 via magnetic coupling. In particular, the front rotor 5 supports a plurality of front permanent magnets 13 (shown in Figures 1 and 4) which are evenly arranged about rotation axis 6 (for example, from six front permanent magnets 13 to sixteen front permanent magnets 13 could be provided) and have their polarities oriented axially (i.e. parallel to rotation axis 6); similarly, the rear rotor 9 supports a plurality of rear permanent magnets 14 (shown in Figure 3) which are evenly arranged about rotation axis 6 and have their polarities oriented axially (i.e. parallel to rotation axis 6).

According to the embodiment shown in the accompanying figures, the front rotor 5 comprises a plurality of front seats which are arranged around rotation axis 6, are circumferentially spaced to one another and contain the respective front permanent magnets 13. Preferably, the front permanent magnets 13 have each a cylindrical shape (axially oriented, i.e. with the central axis of symmetry oriented axially and therefore parallel the rotation axis 6) and thus also the front seats internally have a cylindrical shape that copies in negative the shape of the front permanent magnets 13.

Similarly, according to the embodiment shown in the accompanying figures, the rear rotor 9 comprises a plurality of rear seats which are arranged around rotation axis 6, are circumferentially spaced to one another and contain the respective rear permanent magnets 14. Preferably, the rear permanent magnets 14 have each a cylindrical shape (axially oriented, i.e. with the central axis of symmetry oriented axially and therefore parallel to rotation axis 6) and thus also the rear seats internally have a cylindrical shape that copies in negative the shape of the rear permanent magnets 14.

The front permanent magnets 13 are distributed around rotation axis 6 and are circumferentially spaced to one another and similarly the rear permanent magnets 14 are distributed around rotation axis 6 and are circumferentially spaced to one another so that each front permanent magnet 13 is always axially aligned with a corresponding rear permanent magnet 14.

The same number of front permanent magnets 13 and rear permanent magnets 14 is provided such that each front permanent magnet 13 is axially aligned with a respective rear permanent magnet 14 and is therefore magnetically attracted by the respective rear permanent magnet 14; obviously, the polarities of permanent magnets 13 and 14 must be conveniently arranged so that two axially aligned permanent magnets 13 and 14 magnetically attract each other (i.e. do not magnetically repel each other).

According to a preferred, but non-binding, embodiment, the polarities of front permanent magnets 13 (and thus, consequently, the polarities of rear permanent magnets 14) are alternately inverted, i.e**.** each front permanent magnet 13 is located between two front permanent magnets 13 having opposite polarities (and thus each rear permanent magnet 14 is located between two rear permanent magnets 14 having opposite polarities). In this way, if for some reason the front rotor 5 rotates with respect to the rear rotor 9 (i.e**.** loses synchronism with respect to the rear rotor 9), the magnetic thrust of permanent magnets 13 and 14 tends to return the front rotor 5 to its original position with respect to the rear rotor 9.

Obviously, the permanent magnets 13 and 14 must be adapted to generate a relatively strong magnetic field so that the influence of the magnetic field extends to a distance sufficient to exceed the distance between the rotors 5 and 9 by passing through the digital screen 3 that is interposed between the rotors 5 and 9.

In the embodiment shown in the accompanying figures, the number of balls 8 is equal to the number of front permanent magnets 13 and the balls 8 are interspersed with the front permanent magnets 13 so that between two adjacent balls 8 there is always only one front permanent magnet 13. Similarly, in the embodiment shown in the accompanying figures, the number of balls 12 is equal to the number of rear permanent magnets 14 and the balls 12 are interspersed with the rear permanent magnets 14 so that between two adjacent balls 12 there is always only one rear permanent magnet 14**.** Since the number of front permanent magnets 13 is equal to the number of rear permanent magnets 14, the number of balls 8 is also equal to the number of balls 12.

The digital screen 3 is realized so as to be insensitive to the magnetic field (i.e. so as not to be influenced by the presence of the permanent magnets 13 and 14). The digital screen 3 may also contain ferromagnetic material that allows to increase the influence of magnetic field beyond the digital screen 3 (as it reduces the width of the air gap existing between the permanent magnets 13 and 14).

In the embodiment shown in the accompanying figures, the rear rotor 9 is arranged behind the digital screen 3 so to be on the opposite side of digital screen 3 with respect to the front rotor 5 and thus the digital screen 3 is interposed between the front rotor 5 and the rear rotor 9. According to a different embodiment, the rear rotor 9 is arranged in front of digital screen 3 (which is thus located behind both front rotor 5 and rear rotor 9); obviously in this embodiment the rear rotor 9 must necessarily have a centrally-holed ring shape so that the digital screen 3 is visible through a central through hole of rear rotor 9.

The embodiments described herein can be combined with each other without departing from the scope of protection of the present invention.

The digital and analogue instrument 1 finds advantageous application in any type of road vehicle (for example a car or a motorcycle) and also in any type of non-road vehicle.

The digital and analogue instrument 1 described above has numerous advantages.

Firstly, the digital and analogue instrument 1 described above allows the pointer 2 to be safely moved with high speeds and accelerations and thus it can be used also to indicate the value of physical quantities that change suddenly; this result is achieved thanks to a particularly strong and stable magnetic coupling between the two rotors 5 and 9.

Moreover, the digital and analogue instrument 1 described above has a particularly small bulk and thus can be integrated into any type of vehicle dashboard.

Finally, the digital and analogue instrument 1 described above has relatively low production costs as it uses simple and readily available components on the market.

### LIST OF REFERENCE NUMERALS OF THE FIGURES

- 1: digital and analogue instrument
- 2: pointer
- 3: digital screen
- 4: actuator device
- 5: front rotor
- 6: axis of rotation
- 7: containing ring
- 8: balls
- 9: rear rotor
- 10: electric motor
- 11: containing ring
- 12: balls
- 13: front permanent magnets
- 14: rear permanent magnets

## Claims

1. Digital and analogue instrument (1) for a vehicle and comprising:
a digital screen (3);
a pointer (2) which is a movable manner so as to move in front of the digital screen (3); and
an actuator device (4) configured to move the pointer (2) by transmitting motion to the pointer (2) through a contactless magnetic coupling and comprising: a front rotor (5) which is arranged in front of the digital screen (3), is rotatably mounted about a central rotation axis (6), and supports the pointer (2); a plurality of front permanent magnets (13) supported by the front rotor (5); a rear rotor (9) which is rotatably mounted about the central rotation axis (6) and is arranged behind the digital screen (3) in order to be on the opposite side of the digital screen (3) with respect to the front rotor (5); a plurality of rear permanent magnets (14) that are supported by the rear rotor (9) and are configured to be magnetically attracted by the respective front permanent magnets (13); and an electric motor (10) configured to rotate the rear rotor (9) about the rotation axis (6);
the digital and analogue instrument (1) is **characterised in that:**
the front rotor (5) has a ring shape having a central hole which is arranged at the digital screen (3) so that the digital screen (3) is visible through the central hole of the front rotor (5);
the pointer (2) is integral with the front rotor (5) and projects cantilevered inwards from the front rotor (5) so as to be located at the central hole of the front rotor (5) and overlap the digital screen (3); and
the front permanent magnets (13) are distributed around the rotation axis (6) and are circumferentially spaced to one another and similarly the rear permanent magnets (14) are distributed around the rotation axis (6) and are circumferentially spaced to one another so that each front permanent magnet (13) is always axially aligned with a corresponding rear permanent magnet (14).

2. Digital and analogue instrument (1) according to claim 1, wherein the front permanent magnets (13) and the rear permanent magnets (14) are oriented so to have their polarities oriented axially, i.e. parallel to the rotation axis (6).

3. Digital and analogue instrument (1) according to claim 1 or 2, wherein the front rotor (5) comprises a plurality of front seats which are distributed around the rotation axis (6), are circumferentially spaced to one another and contain the respective front permanent magnets (13).

4. Digital and analogue instrument (1) according to claim 1, 2 or 3, wherein each front permanent magnet (13) has an axially oriented cylindrical shape, i.e. with a central axis of symmetry oriented axially and thus parallel to the rotation axis (6).

5. Digital and analogue instrument (1) according to any one of claims 1 to 4, wherein the rear rotor (9) comprises a plurality of rear seats which are distributed around the rotation axis (6), are circumferentially spaced to one another and contain the respective rear permanent magnets (14).

6. Digital and analogue instrument (1) according to any one of claims 1 to 5, wherein each rear permanent magnet (14) has an axially oriented cylindrical shape, i.e. with a central axis of symmetry oriented axially and thus parallel to the rotation axis (6).

7. Digital and analogue instrument (1) according to any one of claims 1 to 6, wherein there is provided the same number of front permanent magnets (13) and rear permanent magnets (14) so that each front permanent magnet (13) is axially aligned with a respective rear permanent magnet (14) and is therefore magnetically attracted by the respective rear permanent magnet (14).

8. Digital and analogue instrument (1) according to any one of claims 1 to 7, wherein the polarities of the front permanent magnets (13) are alternately inverted, i.e. each front permanent magnet (13) is located between two front permanent magnets (13) having opposite polarities.

9. Digital and analogue instrument (1) according to any one of claims 1 to 8 and comprising a front containing ring (7) which is stationary, is coaxial to the front rotor (5) and accommodates the front rotor (5) therein so that the front rotor (5) is free to slide with respect to the front containing ring (7).

10. Digital and analogue instrument (1) according to claim 9, wherein the front rotor (5) supports a plurality of first balls (8) which are arranged laterally to come into contact with the front containing ring (7) and are idly housed in respective seats in order to rotate freely with respect to the front rotor (5).

11. Digital and analogue instrument (1) according to claim 10, wherein the number of first balls (8) is equal to the number of front permanent magnets (13) and the first balls (8) are interspersed with the front permanent magnets (13) such that between two adjacent first balls (8) there is always only one front permanent magnet (13).

12. Digital and analogue instrument (1) according to any one of claims 1 to 11 and comprising a rear containing ring (11) which is stationary, is coaxial to the rear rotor (9) and accommodates the rear rotor (9) therein so that the rear rotor (9) is free to slide with respect to the rear containing ring (11).

13. Digital and analogue instrument (1) according to claim 12, wherein the rear rotor (9) supports a plurality of second balls (12) which are arranged laterally to come into contact with the rear containing ring (11) and are idly housed in respective seats in order to freely rotate with respect to the rear rotor (9).

14. Digital and analogue instrument (1) according to claim 13, wherein the number of second balls (12) is equal to the number of rear permanent magnets (14) and the second balls (12) are interspersed with the rear permanent magnets (14) so that between two adjacent second balls (12) there is always only one rear permanent magnet (14).

15. Digital and analogue instrument (1) according to any one of claims 1 to 14, wherein the electric motor (10) is coaxial to the rear rotor (9) and directly supports the rear rotor (9) as the rear rotor (9) is fixed to one end of a rotating shaft of the electric motor (10).
